# FASCICULE DE BREVET EUROPEEN

(11) **EP 3 084 078 B1**
(45) Date de publication et mention de la délivrance du brevet: **27.09.2017**
(21) Numéro de dépôt: 14814892.7
(22) Date de dépôt: 18.12.2014
(51) Int. Cl.: E01D 19/00, F16F 7/08, E01D 19/16

(54) **DISPOSITIF ET PROCEDE D'AMORTISSEMENT PAR FRICTION**
VORRICHTUNG UND VERFAHREN ZUR REIBUNGSDÄMPFUNG
DEVICE AND METHOD FOR FRICTION DAMPING

(30) Priorité: 18.12.2013 CH 20962013
(43) Date de publication de la demande: 26.10.2016
(73) Titulaire: VSL International AG, 3014 Bern (CH)
(72) Inventeur: ANNAN, Rachid, CH-3255 Rapperswil BE (CH)
(74) Mandataire: P&TS SA (AG, Ltd.)
(86) Numéro de dépôt international: PCT/EP2014/078564
(87) Numéro de publication internationale: WO 2015/091859

(56) Documents cités:
- EP-A1- 1 035 350
- WO-A1-02/090681
- FR-A1- 2 664 920
- JP-A- H0 396 506
- JP-A- 2001 254 312

## Description

### Domaine technique

La présente invention concerne le domaine du génie civil. En particulier, la présente invention concerne un dispositif et un procédé d'amortissement à friction permettant d'amortir les déplacements relatifs, et en particulier les oscillations, entre un premier élément structurel et un deuxième élément structurel d'un ouvrage.

Plus particulièrement, mais de façon non limitative, la présente invention concerne un dispositif et un procédé d'amortissement des vibrations de câbles d'un ouvrage de construction, tels que les haubans d'un pont, d'une toiture, de passerelle suspendue, d'éléments structurels potentiellement soumis à des vibrations ou à des déplacements de grande amplitude ou tout autre ouvrage suspendu.

### Etat de la technique

Dans les ouvrages de génie civil, différents éléments structurels sont fréquemment soumis à des déplacements relatifs, par exemple des mouvements relatifs ou des vibrations relatives.

Il est connu d'amortir de tels déplacements relatifs par des moyens viscoélastiques ou par des moyens agissant par frottement ou friction.

Ainsi, par exemple le document FR 2 664 920 propose un dispositif d'amortissement des vibrations d'un hauban de pont. Ce dispositif agit de façon viscoélastique et met en oeuvre un poteau rigide monté en un point intermédiaire de sa longueur dans une embase fixe, de façon à pouvoir osciller autour de ce point dans toutes les directions. Les déplacements du pied du poteau sont amortis par exemple au moyen d'éléments viscoélastiques. L'amplitude des mouvements qui peut être amortie est limitée par l'embase au niveau du pied du poteau. Ce dispositif ne permet pas d'absorber des déplacements de grande amplitude dans toutes les directions.

De plus, la mise en place de systèmes tels que décrits dans le document FR 2 664 920 implique l'utilisation de paliers mécaniques dont les performances en fatigue et la durabilité sont limités, et ne conviennent donc pas à une utilisation pour des structures soumises à de nombreux cycles de charge dynamique.

Le document EP1035350 décrit un autre type de dispositif d'amortissement, formant un amortisseur interne fonctionnant par friction, dans lequel on amortit les mouvements d'oscillations transversaux d'un câble. Cependant, cette solution ne permet pas au sein du même dispositif d'amortissement d'amortir plusieurs composantes d'un mouvement relatif de grande amplitude entre un premier élément structurel et un deuxième élément structurel d'un ouvrage.

FR2751673 décrit un autre dispositif comprenant un anneau élastique ou viscoélastique pour amortir les vibrations d'un câble. Ce dispositif est uniquement adapté à l'amortissement de vibrations de faible amplitude dans un plan perpendiculaire au câble.

FR2631407 concerne des perfectionnements aux dispositifs pour amortir les vibrations des haubans, et met en oeuvre un organe annulaire monté sur un tronçon du hauban. Un coussin en une pâte ou graisse sous pression remplit la cavité annulaire. Une structure rigide relie l'organe annulaire à une fondation. A nouveau, ce dispositif ne convient pas à l'amortissement de déplacements de grande amplitude selon des directions quelconques.

Il arrive que les différents éléments structurels d'un ouvrage se déplacent l'un par rapport à l'autre selon différentes composantes, par exemple par translation selon deux ou trois directions, ou par rotation autour de deux axes, ou selon une combinaison de déplacements linéairement indépendants. Par exemple, les haubans d'un pont se déplacent parfois selon une première direction orthogonale au hauban et dirigée vers l'élément structurel soutenu par le hauban, par exemple la travée d'un pont, et selon une autre direction perpendiculaire à la première direction et au hauban. Des déplacements de moindre amplitude dans le sens du hauban peuvent par exemple résulter de dilatations. Certains éléments structurels subissent aussi des rotations par rapport à d'autres éléments structurels du même ouvrage.

Les dispositifs d'amortissement existants sont cependant peu adaptés à l'amortissement de tels déplacements complexes selon plusieurs composantes.

### Bref résumé de l'invention

Un but de la présente invention est de proposer un dispositif d'amortissement exempt des limitations des dispositifs connus, et permettant d'amortir des déplacements selon différentes composantes entre un premier élément structurel et un deuxième élément structurel d'un ouvrage.

Un autre but de l'invention est de permettre de s'accommoder de déplacements de petites et/ou de grandes amplitudes pour chacune des composantes d'un déplacement complexe, avec un amortissement qui peut être choisi indépendamment pour chacune de ces composantes élémentaires.

Selon l'invention, ces buts sont atteints notamment au moyen d'un dispositif d'amortissement à friction permettant d'amortir les déplacements relatifs entre un premier élément structurel et un deuxième élément structurel d'un ouvrage de génie civil, comprenant :
- un premier système d'amortissement permettant d'amortir une première composante de déplacement relatif entre ledit premier élément structurel (20) et ledit deuxième élément structurel, ledit premier système d'amortissement comportant une première surface de friction et une deuxième surface de friction, les premières et deuxièmes surfaces de friction étant en outre déplaçables en translation l'une par rapport à l'autre de manière à permettre l'amortissement de ladite première composante de déplacement relatif, les premières et deuxièmes surfaces de friction étant en contact et contraintes l'une contre l'autre pour former un premier engagement par friction de sorte que ladite première composante de déplacement relatif est amortie par ledit premier engagement par friction ;
   un deuxième système d'amortissement permettant d'amortir une deuxième composante de déplacement relatif entre ledit premier élément structurel et ledit deuxième élément structurel, ledit deuxième système d'amortissement comportant une troisième surface de friction et une quatrième surface de friction, les troisièmes et quatrièmes surfaces de friction étant en contact et contraintes l'une contre l'autre, les troisièmes et quatrièmes surfaces de friction étant en outre déplaçables en rotation l'une par rapport à l'autre de manière à permettre l'amortissement de ladite deuxième composante de déplacement relatif
   dans lequel le premier système d'amortissement et le deuxième système d'amortissement sont placés en série, et une pièce intermédiaire entre ledit premier système d'amortissement et ledit deuxième système d'amortissement, ladite pièce intermédiaire comportant une première extrémité munie de ladite deuxième surface de friction et une deuxième extrémité munie de ladite troisième surface de friction.

Dans cette demande, deux systèmes d'amortissement sont considérés comme placés en série si la première extrémité d'un système est liée par une liaison fixe ou articulée à un point fixe par rapport à la première extrémité de l'autre système, et si la deuxième extrémité du premier système est liée par une liaison fixe ou articulée à un point dont on souhaite amortir les déplacements par rapport à la deuxième extrémité du deuxième système.

L'invention concerne en particulier un dispositif dans lequel une première extrémité du premier système et une première extrémité du deuxième système sont liées l'une à l'autre par une liaison fixe ou pivotante, dans laquelle une deuxième extrémité du premier système d'amortissement est liée par une liaison fixe ou pivotante à un hauban, et dans lequel la deuxième extrémité du deuxième système est liée par une liaison fixe ou pivotante à un élément structurel, par exemple à une fondation ou un tablier de pont.

Le premier élément structurel peut être un câble sous tension fixé par un point d'ancrage au deuxième élément structurel.

Cette solution présente notamment l'avantage par rapport à l'art antérieur de permettre de traiter de façon indépendante chaque composante du déplacement relatif et donc chaque type d'oscillation correspondante.

Les différentes composantes du déplacement à amortir peuvent être des composantes de déplacement selon différents axes, par exemple des translations et/ou des rotations selon différents axes.

La première composante de déplacement relatif peut être constituée par une première translation selon une première direction (X) s'étendant entre ledit premier élément structurel et ledit deuxième élément structurel.

La deuxième composante de déplacement relatif peut être constituée par une deuxième translation selon une troisième direction (Y) différente de la première direction.

La troisième direction peut être sensiblement orthogonale à la première direction (X) et à une deuxième direction (Z) tangente au premier élément structurel.

En addition, les différentes composantes du déplacement à amortir peuvent être des composantes de déplacement selon différentes fréquences. Par exemple, un premier système d'amortissement peut être optimisé pour l'amortissement de déplacements à basse fréquence tandis qu'un autre système d'amortissement peut être optimisé pour l'amortissement de déplacements à plus hautes fréquences, par exemple de vibrations.

De manière avantageuse, l'amortissement des déplacements suivant la première composante (resp. deuxième composante) grâce au premier (resp. deuxième) dispositif d'amortissement n'influence pas l'amortissement des déplacements selon la deuxième composante (respectivement première) par le deuxième (resp. premier) dispositif d'amortissement en série.

Chaque système d'amortissement permet de préférence un déplacement relatif de grande amplitude le long ou autour d'un seul axe, constituant l'axe principal de ce système. Par exemple, le premier système d'amortissement permet une translation de grande amplitude le long de l'axe X, tandis que le deuxième système d'amortissement permet une rotation de grande amplitude autour de l'axe Z. Une translation est considérée de grande amplitude lorsqu'elle dépasse par exemple 500 mm. Une rotation est considérée comme de grande amplitude lorsqu'elle dépasse par exemple 10°, de préférence 15°. Les translations et ou rotations selon ces axes principaux sont amorties grâce aux surfaces de friction.

En outre, chaque système d'amortissement comporte avantageusement des éléments de guidage qui permettent aux pièces en déplacement relatif de se déplacer l'une par rapport à l'autre, et qui autorisent de préférence en outre des déplacements de faible magnitude le long ou autour d'au moins un axe différent de l'axe principal. Par exemple, les éléments de guidage du premier système d'amortissement peuvent autoriser des translations de faible amplitude le long de l'axe Y, ou des rotations de faible amplitude autour de l'axe Z. Un déplacement de moins de 10 millimètres, ou une rotation de moins de 1°, sont par exemple considérés comme des déplacements de faible amplitude. Ces degrés de liberté supplémentaire limitent les contraintes sur les composants du système.

Selon une disposition préférentielle, la première composante de déplacement est un mouvement de translation selon une première direction (X) s'étendant entre le premier élément structurel et le deuxième élément structurel.

Selon une autre disposition préférentielle, adoptée seule ou en combinaison avec la disposition précédente, la deuxième composante de déplacement relatif est un mouvement de translation suivant une deuxième direction (Y). En présence de ces deux dispositions préférentielles, de préférence, la deuxième direction (Y) est orthogonale à la première direction (X). Avantageusement, cette deuxième direction (Y) est sensiblement orthogonale à la direction longitudinale du premier élément structurel qui est constitué de préférence d'un élément de forme générale allongée, en particulier un câble.

L'un des avantages de la solution de l'invention est de permettre d'amortir des mouvements relatifs complexes, c'est-à-dire des mouvements comprenant plusieurs composantes, par un seul dispositif monté entre un premier élément structurel et un deuxième élément structurel. On évite ainsi le recours à plusieurs dispositifs distincts qui nécessitent un montage plus long et un encombrement qui peut s'avérer problématique dans certaines configurations d'ouvrages.

Le choix du matériau employé pour d'un côté la première surface de friction et d'un autre côté la deuxième surface de friction, d'une part au sein du premier système d'amortissement et d'autre part au sein du deuxième système d'amortissement, ainsi que le réglage de la force de pression entre les deux éléments de frottement, permettent de déterminer l'amplitude de l'amortissement de la composante du mouvement relatif considérée. De cette façon, il est donc possible de déterminer les caractéristiques de fonctionnement du premier (deuxième) système d'amortissement, telles que la plage de valeur en intensité, en fréquence et/ou en énergie du déplacement relatif traité par ce premier (deuxième) système d'amortissement.

Par exemple, le recours à un matériau polymère ou à matrice polymérique pour le premier élément de friction, et d'un matériau métallique avec une dureté de surface déterminée pour le deuxième élément de friction, permet au système d'amortissement d'agir sur une grande plage d'amplitudes de vibration.

Il est aussi possible d'utiliser des polymères pour les deux éléments de friction, ou de l'acier pour les deux éléments de friction.

La présente invention porte également sur un ouvrage de génie civil comprenant un premier élément structurel et un deuxième élément structurel, comportant au moins un dispositif d'amortissement tel que décrit dans le présent texte.

Dans un tel ouvrage de génie civil, le premier élément structurel peut être par exemple un câble sous tension fixé en un point d'ancrage au deuxième élément structurel.

Ainsi, par exemple, dans un tel ouvrage de génie civil, le deuxième élément structurel peut être une fondation, en particulier un tablier de pont ou un élément de structure solidaire d'un tablier de pont, ou un élément de toiture suspendue ou élément de structure solidaire d'une toiture suspendue.

La présente invention porte également sur un procédé d'amortissement par friction des déplacements relatifs entre un premier élément structurel et un deuxième élément structurel d'un ouvrage de génie civil, comprenant les étapes suivantes :
- fournir un premier système d'amortissement permettant d'amortir une première composante de déplacement relatif entre ledit premier élément structurel et ledit deuxième élément structurel et comportant :
   une première surface de friction fixe et mécaniquement associée avec le premier élément structurel,
   une deuxième surface de friction apte à se déplacer en outre en translation par rapport à la première surface de friction
- fournir un deuxième système d'amortissement permettant d'amortir une deuxième composante de déplacement relatif entre ledit premier élément structurel et ledit deuxième élément structurel, ladite première composante de déplacement relatif étant différente de la deuxième composante de déplacement relatif, ledit deuxième système d'amortissement comportant :
   une troisième surface de friction,
   une quatrième surface de friction, déplaçables en outre en rotation l'une par rapport à l'autre,
- placer la première surface de friction et la deuxième surface de friction d'une part et la troisième surface de friction et la quatrième surface de friction d'autre part en contact en les contraignant l'une contre l'autre pour former deux engagements par friction de sorte que le mouvement relatif entre d'une part la première surface de friction et la deuxième surface de friction et d'autre part entre la troisième surface de friction et la quatrième surface de friction soit amorti par ledit engagement par friction.

### Brève description des figures

Des exemples de mise en oeuvre de l'invention sont indiqués dans la description illustrée par les figures annexées dans lesquelles :
la figure 1 illustre un premier mode de réalisation de l'invention représentant un dispositif d'amortissement en perspective,
la figure 2 est une vue similaire à la figure 1 avec retrait de certaines portions extérieures pour visualiser l'intérieur du dispositif d'amortissement,
la figure 3 est une vue de face du dispositif d'amortissement selon la direction III-III de la figure 1,
la figure 4 est une vue en coupe selon la direction IV de la figure 3,
la figure 5 est une vue de côté du dispositif d'amortissement selon la direction V de la figure 1,
la figure 6 est une vue en coupe de la figure 5 selon la direction VI-VI"
les figures 7 à 9 sont des vues en coupe de la figure 6, respectivement selon les directions VII-VII, VIII-VIII et IX-IX,
la figure 10 est une vue de côté du dispositif d'amortissement selon la direction V de la figure 1,
les figures 11 et 12 sont des vues en coupe de la figure 10, respectivement selon les directions XI-XI et XII-XII,
la figure 13 représente le premier mode de réalisation de l'invention selon une représentation simplifiée montrant la cinématique du dispositif d'amortissement au sein d'un ouvrage,
la figure 14 illustre un deuxième mode de réalisation de l'invention également de façon simplifiée en montrant la cinématique du dispositif d'amortissement au sein d'un ouvrage, et
la figure 15 illustre de manière simplifiée un troisième mode de réalisation de l'invention.

### Description détaillée d'exemples de modes de réalisation

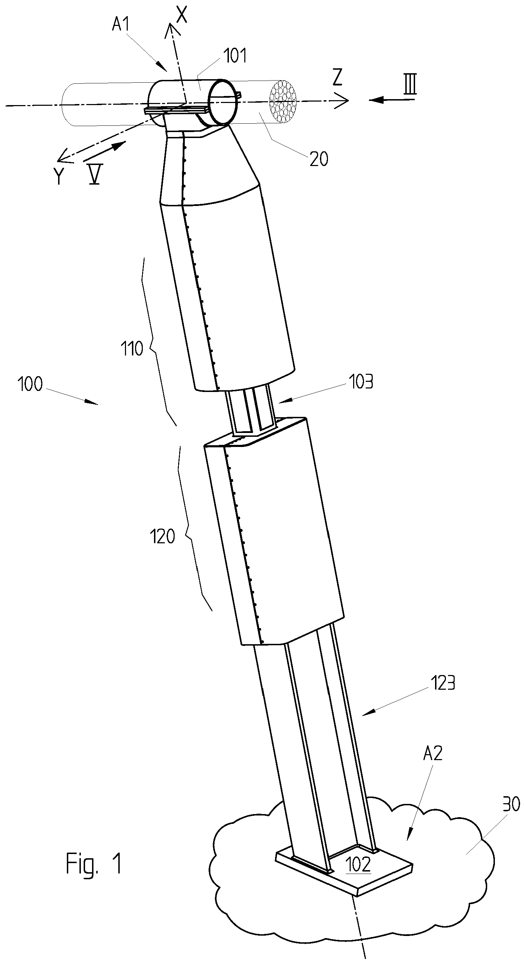

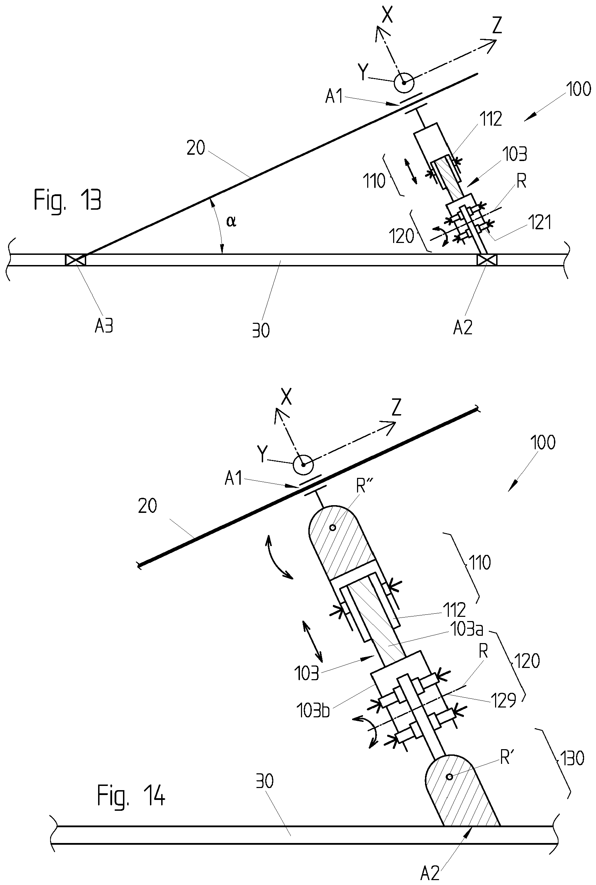

Comme on le voit sur les figures 1 et 13, le dispositif d'amortissement 100 selon le premier mode de réalisation est monté dans cet exemple entre un câble 20 ou hauban (formant un premier élément structurel) et un deuxième élément structurel 30, par exemple une fondation, une dalle, le tablier d'un pont suspendu ou bien une pièce montée solidaire d'un tel tablier. Le câble peut être lié à un pylône (non représenté).

Au niveau du câble 20, le dispositif d'amortissement 100 est monté par exemple par un manchon 101 enserrant le câble 20 en formant un premier point d'ancrage A1. Le manchon 101 peut être fixe par rapport au câble, ou apte à coulisser longitudinalement le long de ce câble.

Au niveau de la fondation 30, le dispositif d'amortissement 100 est monté par exemple par une patte de montage 102 soudée ou rivetée à la fondation 30 en formant un deuxième point d'ancrage A2.

Le dispositif d'amortissement 100 relie donc le premier point d'ancrage A1 au deuxième point d'ancrage A2 selon une première direction X correspondant à la direction longitudinal ou direction principale du dispositif d'amortissement 100. Dans cet agencement, une deuxième direction (Z) est définie par le câble 20, et est orthogonale à la première direction (X). On définit également une troisième direction (Y) orthogonale à la première direction (X) et à la deuxième direction (Z). En pratique, le plan (X, Y) contenant la première direction (X) et la troisième direction (Y), correspond au plan normal à la tangente du câble 20 au point A1. Typiquement, le câble est soumis à des mouvements de plus grande amplitude dans ce plan que selon la deuxième direction (Z).

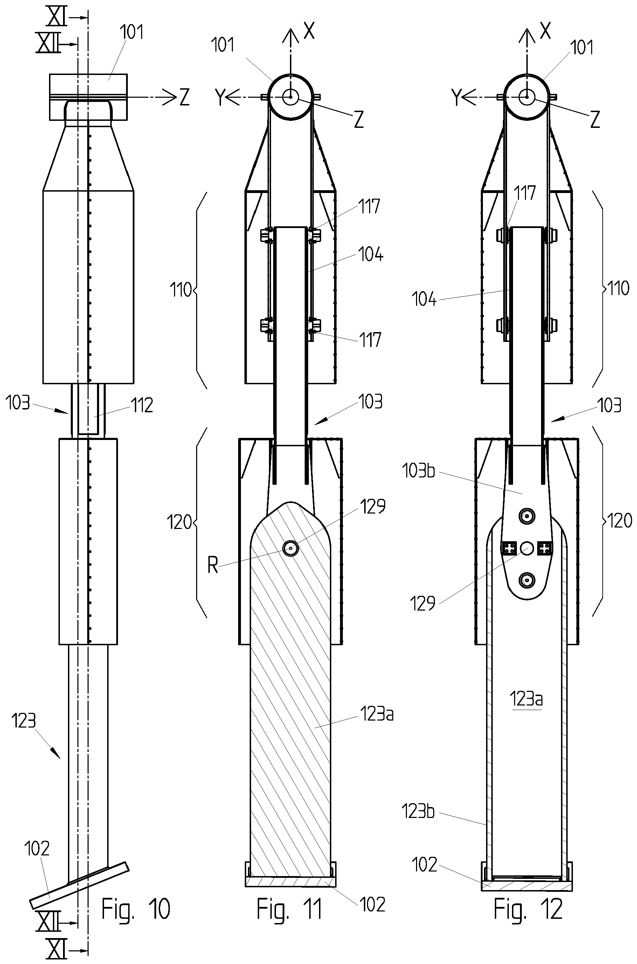

Dans ce premier mode de réalisation illustré sur les figures 1 à 13, le dispositif d'amortissement 100 se compose d'un premier système d'amortissement 110 situé dans la portion du dispositif d'amortissement 100 adjacente au câble 20 (partie haute dispositif d'amortissement 100 sur les figures 1 et 13) et d'un deuxième système d'amortissement 120 situé dans la portion du dispositif d'amortissement 100 adjacente à la fondation 30 (partie basse du dispositif d'amortissement 100 sur les figures 1 et 13). Comme il sera exposé en détail ci-après, le premier système d'amortissement 110 permet d'absorber et d'amortir la composante de translation entre le câble 20 et la fondation 30 selon la première direction X, par exemple des déplacements lents ou des oscillations selon l'axe X.

Le deuxième système d'amortissement 120 permet quant à lui d'absorber et d'amortir les déplacements du câble selon l'axe Y, en les projetant sous forme de rotation autour de l'axe Z d'une pièce intermédiaire 103 par rapport au reste de l'ensemble 120. Ce deuxième système d'amortissement permet également d'amortir des déplacements relatifs lents ou des vibrations à plus haute fréquence.

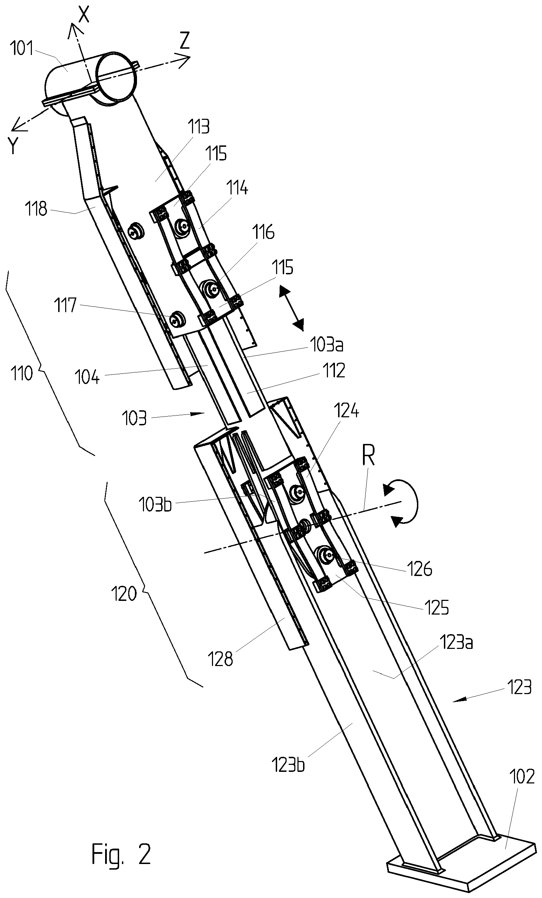

Dans cet exemple, la pièce intermédiaire 103 (voir la figure 2) est commune au premier système d'amortissement 110 et au deuxième système d'amortissement 120 qu'elle relie. Cette pièce intermédiaire 103 rigide forme la jonction matérielle entre ledit premier système d'amortissement 110 et ledit deuxième système d'amortissement 120. Ainsi, le dispositif d'amortissement 100 selon le premier mode de réalisation comporte deux système d'amortissement 110 et 120 placés en série et permettant chacun d'amortir une composante de déplacement relatif différente.

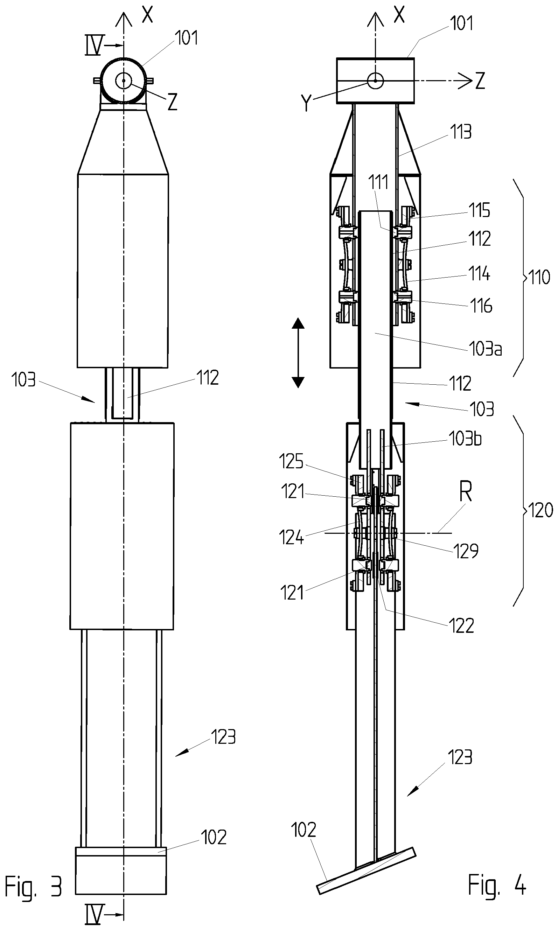

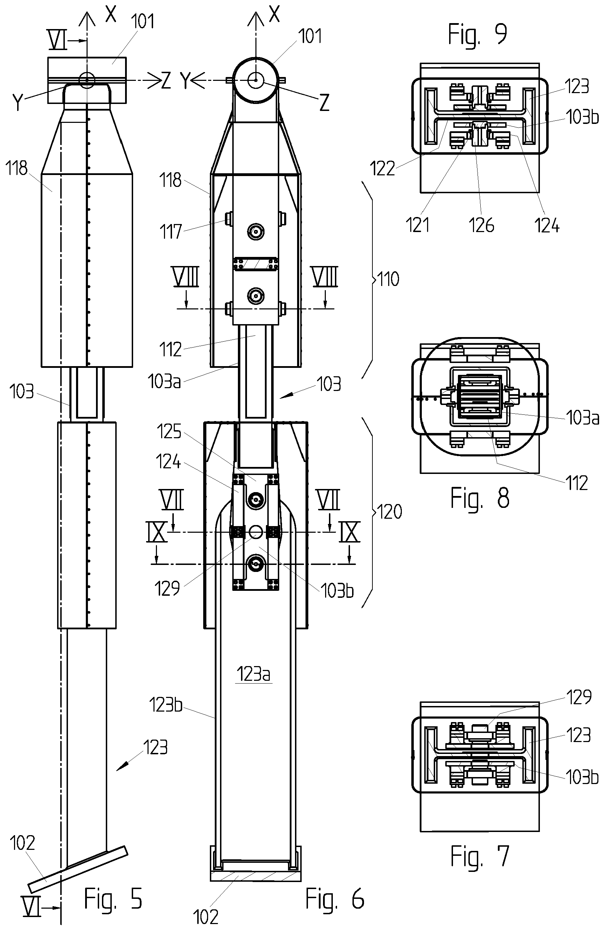

La pièce intermédiaire 103 comporte une première extrémité 103a (en haut sur les figures 1 et 13) munie d'un deuxième élément de friction 112 faisant partie du premier système d'amortissement 110 (voir figures 2 et 4). La deuxième extrémité 103b de cette pièce (en bas sur les figures 1 et 13) est munie d'un troisième élément de friction 121 faisant partie du deuxième système d'amortissement 120 (voir figures 4 et 9).

On décrit maintenant le premier système d'amortissement 110 du dispositif d'amortissement 100 selon le premier mode de réalisation. Ce système d'amortissement permet une translation le long de l'axe X de la pièce intermédiaire 103 par rapport aux autres composants du premier système d'amortissement. La force nécessaire à cette translation est déterminée par la friction de zones de friction en contact sur la pièce 103 et sur un élément du premier système d'amortissement 120, de manière à réaliser un amortissement.

Plus spécifiquement, la première extrémité 103a de la pièce intermédiaire 103 forme un coulisseau s'étendant selon la première direction (X) et définissant deux faces planes, parallèles entre elles et à la première direction (X). Ces faces sont équipées dudit deuxième élément de friction 112 du premier système d'amortissement 110. Dans un exemple non limitatif, ce deuxième élément de friction est réalisé sous la forme d'une deuxième série de patins de friction s'étendant selon la première direction (X). Pour coopérer par friction avec cette deuxième série de patins de friction, le premier système d'amortissement 110 comprend en outre un tube creux113 équipé d'un élément de friction 111 sous la forme ici d'une première série de patins de friction faisant saillie sur la face interne du tube 113 en étant poussée par des moyens de rappel élastiques, par exemple des lames ressort, en direction de l'intérieur du tube 113. Le tube 113 est engagé autour du coulisseau de sorte qu'une surface de la première série de patins de friction 111 et de la deuxième série de patins de friction 112 frottent l'une contre l'autre. Les surfaces de friction peuvent être définies par d'autres éléments que des séries de patins peuvent être employées.

Ainsi, par ce contact sous pression contrôlée, le frottement entre la surface de la première série de patins de friction 111 (ici des patins en forme de disque) et la surface de la deuxième série de patins de friction 112 (ici des patins en forme de piste allongée, par exemple rectangulaire) lors d'un déplacement relatif en translation selon la première direction X (vers le haut et/ou vers le bas sur les figures 1, 2 et 13) entre le tube creux 113 (qui suit le mouvement élémentaire du câble 20 selon la première direction X) et le coulisseau 103 permet d'amortir une composante de mouvement relatif selon l'axe X.

Les moyens de rappel élastiques peuvent être formés d'un système avec des lames ressort 114 contraintes en direction de l'intérieur du tube 113, et qui appuient sur deux languettes rigides 115 portant chacune un support 116 pour un patin de friction 111. Le support 116 traverse la paroi du tube 113 au niveau d'un perçage 113a. Ici, les deux languettes rigides 115, et donc les deux patins de frictions coopèrent par paire avec chacune des deux faces planes précitées du coulisseau portant la deuxième série de patins de friction 112. Cependant, à titre d'alternative, on peut utiliser, de chaque côté du coulisseau formant la première extrémité 103a de la pièce intermédiaire 103, un seul patin de friction porté par un seul support tel que la languette rigide 115. On comprend que ce système de rappel par lames ressorts 114 permet d'absorber également un léger déplacement du câble 20 selon la deuxième direction Z. Ce déplacement est généralement beaucoup moins important que les composantes de déplacement selon la première direction X ou selon la troisième direction Y; il s'agit typiquement d'un déplacement de 10 à 20 mm dû à la dilatation ou la contraction du matériau du câble du fait d'écarts de température.

Différents types de systèmes peuvent être prévus pour régler la contrainte de pression exercée par les lames ressort 114 sur les languettes rigides 115 et partant sur les patins de friction 111. Sur la majeure partie de sa longueur comportant son extrémité recevant le coulisseau 103a, le tube creux 113 présente une section carrée. A son extrémité opposée à celle recevant le coulisseau 103a, le tube creux 113 est fixé de façon solidaire, par exemple par soudure, avec le manchon 101.

Dans le cas illustré, le coulisseau 103a est un cylindre creux à section carrée, et porte également des patins de frictions formant des patins de guidage 104 sur les deux autres faces opposées deux à deux et alternant avec les faces portant la deuxième série de patins de friction 112. Ces patins de guidage 104 servent d'appui pour des éléments de guidage 117 disposés à travers les parois du tube 113 opposées deux à deux et alternant avec les faces portant la première série de patins de friction 111, ces éléments de guidage 117 servant de butée pour limiter tout débattement latéral (selon la troisième direction Y) entre le tube 113 et le coulisseau 103.

Dans cet exemple, la pièce intermédiaire 103 est un élément mâle qui pénètre dans le tube creux 113 du premier système d'amortissement. Il est possible d'inverser cette configuration et de réaliser une pièce intermédiaire femelle coulissant autour d'un élément mâle lié au premier élément structurel 20.

Les éléments de guidage 117 permettent à la pièce intermédiaire 103 un déplacement relatif par rapport à l'ensemble 103 et au câble 20 qui n'est purement constitué par une translation selon l'axe X; une translation d'amplitude limitée selon l'axe y, voire une rotation d'angle limité autour de l'axe Z, sont possibles.

Grâce à ces éléments de guidage au niveau de chaque articulation, les composantes de déplacement de mouvement du premier élément structurel 20 relativement au deuxième élément structurel 30 qui ne doivent pas être amorties sont laissées libre ou restreintes par des liaisons mécaniques de faible raideur. Typiquement, la force, respectivement le couple, nécessaire pour un déplacement selon un axe autre que celui qui doit être amorti est de l'ordre de 1 à 15% de la force, respectivement du couple, nécessaire à un déplacement de 3 à 500 mm, ou de 1° à 15°, selon la direction amortie.

Avec un tel agencement, le dispositif d'amortissement 100 selon l'invention peut accepter des mouvements de translation selon l'axe X de grande amplitude alors que les amortisseurs externes à friction connus sont utilisables jusqu'à des valeurs de mouvements selon l'axe X de l'ordre 50°mm (millimètres) au-delà et en deçà de la position moyenne. Ainsi, le dispositif d'amortissement 100 selon l'invention permet d'amortir un mouvement vertical du câble 20 au-delà de 50°mm, par exemple jusqu'à 500°mm, même jusqu'à 700 mm ou jusqu'à 1000°mm, voire au-delà.

On décrit maintenant le deuxième système d'amortissement 120 du dispositif d'amortissement 100 selon le premier mode de réalisation. Ce système d'amortissement permet une rotation autour de l'axe Z de la pièce intermédiaire 103 par rapport aux autres composants du deuxième système d'amortissement. Le couple nécessaire à cette rotation est déterminé par la friction de zones de friction en contact sur la pièce 103 et sur un élément du deuxième système d'amortissement 120, de manière à réaliser un amortissement.

Plus spécifiquement, la deuxième extrémité 103b de la pièce intermédiaire forme un étrier (pièce en forme de U renversé) avec deux parois de travail planes, parallèles entre elles et à la première direction (X), équipées du troisième élément de friction 121 sous la forme d'une troisième série de patins de friction (ici des patins en forme de disque 121, voir la figure 4) faisant saillie sur la face interne desdites parois de travail en étant poussée par des moyens de rappel élastiques (ici des lames ressort 124) en direction de l'espace séparant les deux parois de travail. Les parois de travail sont également chacune munies d'un trou de passage entouré de la troisième série de patins de friction 121.

Pour coopérer par friction avec cette troisième série de patins de friction 121, le dispositif d'amortissement 100 comprend en outre une poutrelle en I 123 comprenant deux ailes 123b et une lame centrale 123a équipée du quatrième élément de friction 122 sous la forme d'une quatrième série de patins de friction 122 (ici des patins en forme de disque 122 de plus grand diamètre que les patins 121, voir la figure 4) disposés sur les faces de ladite lame centrale 123a en entourant une ouverture alignée avec et entre lesdits trous de passage (voir la figure 9). Ladite poutrelle 123 est apte à s'engager avec ledit étrier 103b, entre les deux parois de travail, de sorte que le tronçon d'extrémité de la lame 123a est placé entre lesdites parois de travail avec les bords du tronçon d'extrémité desdites parois de travail logés entre les ailes 123b de la poutrelle 123. Le dispositif d'amortissement 100 comprend en outre (voir les figures 4, 6, 7, 11 et 12) un axe matériel 129 passant dans ladite ouverture et lesdits trous de passage en étant coaxial audit axe de rotation (R). Alternativement (voir figure 2), l'axe matériel 129 précité est omis et d'autres guides latéraux sont utilisés entre l'étrier 103b et la poutrelle 123, tels que des appuis ponctuels latéraux parallèles à la troisième direction Y. Ainsi, lors d'un mouvement de rotation autour dudit axe de rotation (R) entre ladite poutrelle 123 et ledit étrier 103b, la surface de la troisième série de patins de friction 121 et la surface de la quatrième série de patins de friction 122 frottent l'une contre l'autre et amortissent les déplacements relatifs selon l'axe Y, en les convertissant en un mouvement de rotation autour dudit axe de rotation (R). On comprend que l'axe de rotation (R) passe par l'ouverture de la lame 123a et par les trous de passage des parois de travail de l'étrier 103b, et est parallèle à la troisième direction Z)

Dans ce mode de réalisation, pour que ce fonctionnement soit possible, et en particulier que l'étrier 103b puisse monter par chevauchement de part et d'autre de l'extrémité supérieure de la lame centrale 123a, l'envergure de la poutrelle en I, c'est-à-dire l'écart entre les ailes 123b est supérieur à la largeur des parois de travail de l'étrier 103b. Par ailleurs, l'angle maximal de rotation autour de l'axe R (axe matériel 29) entre l'étrier 103b et la poutrelle 123 est limité par la venue en butée des bords du tronçon d'extrémité desdites parois de travail de l'étrier 103b contre les ailes 123b de la poutrelle qui constituent des moyens de guidage.

Avec un tel agencement, le dispositif d'amortissement 100 peut accepter des mouvements de rotation de la pièce intermédiaire selon l'axe R avec un angle de valeur suffisante pour compenser de grandes amplitudes de déplacement du câble selon la deuxième direction Y. Dans un exemple, l'angle de rotation maximal est de l'ordre de +-15° par rapport à la position moyenne, soit un débattement angulaire de 30°. Selon la longueur des composants, ce débattement permet de compenser une composante de translation du câble selon la deuxième direction de l'ordre de -°500°mm à + 500°mm. Des angles de 10° (débattement angulaire de 20°), de 25° (débattement angulaire de 50°), voire jusqu'à 30° (débattement angulaire de 60°) peuvent aussi être considérés, de même que des amplitudes maximales différentes selon la direction par rapport à la position de repos.

On comprend que le mouvement de déplacement du câble 20 peut être décomposé en trois mouvements élémentaires de translation, respectivement selon la première direction X, la deuxième direction Z et la troisième direction Y. Les mouvements de rotation du câble sont généralement beaucoup plus faibles et peuvent généralement être négligés. Les trois composantes de translation, et les éventuelles composantes de rotation, sont amorties grâce aux trois composantes du mouvement autorisées respectivement par le premier système d'amortissement (composante en translation selon la première direction X), le deuxième système d'amortissement (composante en rotation autour l'axe R pour compenser le mouvement élémentaire selon la troisième direction Y) et le débattement des lames ressort (composante identique au mouvement élémentaire de translation selon la deuxième direction Z). Ainsi, la composante de translation en X du câble est amortie essentiellement par le premier système d'amortissement, tandis que la composante de translation en Y (perpendiculaire à X et au câble) est amortie essentiellement par le deuxième système d'amortissement. La composante de translation en Z du câble est généralement nettement plus faible que les composantes en X et en Y.

Dans l'exemple illustré, les moyens de rappel élastiques du deuxième système d'amortissement 120 sont analogues à ceux précédemment décrits pour le premier système d'amortissement 110 : des languettes rigides 125 supportant des support 126 pour les patins 121 de la troisième série de patins de friction, et des lames-ressort 124 contraintes en direction de l'intérieur de l'étrier 103b en entraînant les languettes rigides 125.

Les deuxièmes et troisièmes surfaces de friction sont avantageusement excentrées par rapport à l'axe de rotation. De manière générale, les surfaces de frictions pour amortir la rotation dans des systèmes d'amortissement sont avantageusement excentrées.

Des caches extérieurs 118 et 128 démontables permettent d'envelopper et de protéger respectivement le premier système d'amortissement 110 et le deuxième d'amortissement 120.

Le dispositif d'amortissement décrit ci-dessus comporte donc un premier élément 113 solidairement lié au premier élément structurel 20, un deuxième élément 123 solidairement lié au deuxième élément structurel 30, et une pièce intermédiaire 103 apte à translater selon un axe linéaire par rapport au premier élément 113, et apte à pivoter autour d'un axe par rapport au deuxième élément 123. Des moyens de guidage de la pièce intermédiaire 103 par rapport au premier élément 113 permettent une liberté limitée de translation selon l'axe Y et/ou Z et/ou de rotation de la pièce intermédiaire 103 par rapport au premier élément 113. De la même façon, des moyens de guidage de la pièce intermédiaire 103 par rapport au deuxième élément 123 permettent une liberté limitée de translation et/ou de rotation de la pièce intermédiaire 103 par rapport au deuxième élément 123.

La pièce intermédiaire peut aussi être remplacée par différents composants assemblés ou articulés entre eux.

Des degrés de liberté supplémentaires peuvent être prévus. Par exemple, le premier élément 113 peut être libre en rotation et/ou en translation par rapport au câble 20. De la même façon, le deuxième élément peut être libre en rotation et/ou en translation par rapport au deuxième élément structurel 30. Des systèmes d'amortissement supplémentaires peuvent être montés en série avec les premiers ou deuxièmes systèmes d'amortissement 110, 120, afin d'amortir d'autres composantes de déplacements. Des systèmes d'amortissement en parallèles avec n'importe lequel des premiers ou deuxièmes systèmes d'amortissement 110, 120 peuvent aussi être considérés en cas de forces ou de couples importants.

On se tourne maintenant vers un second mode de réalisation illustré de façon schématique sur la figure 14. Ce second mode de réalisation comporte trois systèmes d'amortissement par friction 110, 120 et 130 placés en série et permettant chacun d'amortir une composante de déplacement relatif différent. A cet effet, outre le premier système d'amortissement 110 et le deuxième système d'amortissement 120 décrits précédemment en relation avec les figures 1 à 13, le dispositif d'amortissement 100 comprend un troisième système d'amortissement 130 permettant d'amortir une troisième composante de déplacement relatif entre le deuxième élément structurel (câble 20) et le deuxième élément structurel (fondation 30) et comportant :
une première surface de friction fixe par rapport au deuxième élément structurel,
une deuxième surface de friction fixe par rapport au deuxième système d'amortissement 120,
dans lequel la première surface de friction et la deuxième surface de friction du troisième système d'amortissement sont en contact et contraintes l'une contre l'autre pour former un engagement par friction de sorte que le mouvement relatif entre la première surface de friction et la deuxième surface de friction du troisième système d'amortissement est amorti par ledit engagement par friction,
dans lequel le premier système d'amortissement, le deuxième système d'amortissement et le troisième système d'amortissement sont placés en série, et dans lequel la troisième composante de déplacement relatif est différente de la première composante de déplacement relatif et de la deuxième composante de déplacement relatif.

Au lieu d'être directement reliée à la fondation 30 comme dans le cas du premier mode de réalisation, l'extrémité inférieure du deuxième système d'amortissement 110 est ici reliée au troisième système d'amortissement 130.

De préférence, la troisième composante de déplacement relatif est amortie grâce à un mouvement de rotation autour d'un axe R' parallèle à une troisième direction différente de la deuxième direction R autour de laquelle se produit la rotation autorisée et amortie par le deuxième système d'amortissement. Sur la figure 14, l'axe de rotation R' est parallèle à la troisième direction Y, et permet d'amortir un mouvement élémentaire de translation du câble selon la deuxième direction Z. Cette rotation est de préférence amortie par exemple au moyen de patins de friction non représentés. De façon non limitative, et à titre d'exemple, comme illustré sur la figure 14, le troisième système d'amortissement 130 est monté entre le deuxième système d'amortissement 120 et la fondation 30. Cette rotation pourrait cependant se produire autour d'un autre axe de rotation que l'axe de rotation R'. Par ailleurs, le mode de réalisation de la figure 14 prévoit aussi une rotation non amortie autour de l'axe R" parallèle à R' et disposé entre le hauban 20 et le premier système d'amortissement 110.

Concernant les patins de friction et plus généralement les éléments de friction qui réalisent l'amortissement par frottement entre deux surfaces de friction en contact avec pression d'appui l'une contre l'autre, comme on l'a vu précédemment le choix du ou des matériaux de friction en présence dans le couple réalisant l'engagement par friction est un paramètre déterminant pour les propriétés d'amortissement du système d'amortissement correspondant. Dans un exemple, la première surface de friction est réalisée dans un premier matériau de friction et la deuxième surface de friction correspondante du même système d'amortissement est réalisée dans un deuxième matériau de friction, identique ou différent. L'un au moins parmi ledit premier matériau de friction et ledit deuxième matériau de friction est un matériau polymère ou à matrice polymère avec un coefficient de frottement réduit. Ce type de matériau de friction présente un certain nombre d'avantages, et notamment le fait que le coefficient de friction est sensiblement constant avec le temps et dans des conditions d'humidité et de température variables. De façon optionnelle, un tel matériau polymère contient un lubrifiant. Par ailleurs, de préférence un tel matériau polymère est à base de polyéthylène téréphtalate.

La présente invention porte également sur un ouvrage de génie civil avec un câble 20 qui est monté sur la fondation 30 à l'emplacement d'un point d'ancrage (troisième point d'ancrage A3), le dispositif d'amortissement 100 étant monté entre ledit câble 20 et ladite fondation 30 de façon éloignée dudit point d'ancrage précité. Ce type d'agencement correspond à un amortisseur dit « amortisseur externe » par opposition à d'autres types d'amortisseurs, dits « amortisseurs interne » faisant partie intégrante du câble et pratiquement invisibles (comme dans le document EP1035350), mais qui d'une façon plus générale sont concentriques autour du câble 20.

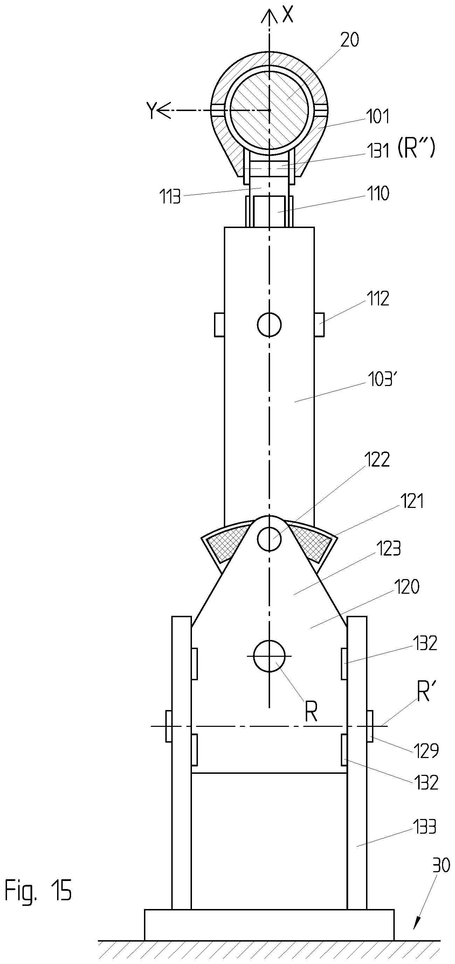

La figure 15 illustre un troisième mode de réalisation dans lequel un premier élément 113 du premier système d'amortissement 110 est liée de manière articulée au manchon 101, grâce à un axe 131 (R") parallèle à l'axe Y et permettant à l'élément 113 de pivoter autour de l'axe Y par rapport au câble 20. Par ailleurs, un élément 123 du deuxième système d'amortissement 120 est liée de manière articulée au deuxième élément structurel 30, grâce à un pivot 129 permettant une rotation autour de l'axe R' parallèle à l'axe Y et permettant à l'élément 123 de pivoter autour de l'axe Y par rapport au deuxième élément structurel 30. En option, le manchon 101 pourrait encore se déplacer longitudinalement le long de l'axe Z parallèle au câble 20. L'axe 131 est optionnel et de préférence non amorti. L'axe 129 est de préférence amorti au moyen de cinquièmes et sixièmes surfaces de friction 132, par exemple de patins, entre l'élément 123 et l'étrier 132 solidaire de la fondation 30.

Le premier élément 113 peut en outre coulisser par rapport à la pièce intermédiaire 103', au travers de surfaces de friction 111, 112 sur ces deux composants, de la manière décrite plus haut. Dans cet exemple, la pièce intermédiaire 103' est cependant constituée par un tube creux dans lequel la pièce 113 est engagée de manière coulissante. Cette translation est amortie grâce aux surfaces de friction sur la pièce 113 et sur le tube 103'.

La pièce intermédiaire 103' peut en outre pivoter autour de l'axe R parallèle à l'axe Z. Cette rotation est amortie grâce à la surface de friction 121 en arc de cercle liée à la pièce 103', et à une surface de friction en regard sur la pièce 123.

Optionnellement, des surfaces de friction peuvent aussi être prévues pour amortir les rotations autour des axes 131 et/ou 129.

De préférence, comme on le voit sur la figure 13, le dispositif d'amortissement 100 forme avec le câble 20 et avec la fondation 30 un triangle rectangle avec un angle alpha aigu dont le sommet est placé audit point d'ancrage A3 entre le câble 20 et la fondation 30. Dans ce cas, l'angle droit est formé entre le câble 20 (deuxième direction Z) et le dispositif d'amortissement 100 (première direction X).

### Numéros de référence employés sur les figures

- 20: Câble (premier élément structurel)
- 30: Deuxième élément structurel
- X: Première direction
- Z: Deuxième direction
- Y: Troisième direction
- A1: Premier point d'ancrage
- A2: Deuxième point d'ancrage
- A3: Troisième point d'ancrage
- 100: Dispositif d'amortissement (premier mode de réalisation)
- 100': Dispositif d'amortissement (deuxième mode de réalisation)
- 101: Manchon
- 102: Patte de montage
- 103: Pièce intermédiaire
- 103a: Première extrémité de la pièce intermédiaire (coulisseau)
- 103b: Deuxième extrémité de la pièce intermédiaire (étrier)
- 104: patins de guidage
- 110: Premier système d'amortissement
- 111: Première surface de friction (première série de patins de friction)
- 112: Deuxième surface de friction (deuxième série de patins de friction)
- 113: Tube creux
- 113a: perçage
- 114: Lames ressort
- 115: Languettes rigides
- 116: Support
- 117: Éléments de guidage
- 118: Cache extérieur
- 120: Deuxième système d'amortissement
- 121: Troisième élément de friction (troisième série de patins de friction)
- 122: Quatrième élément de friction (quatrième série de patins de friction)
- 123: Poutrelle en I
- 123a: Lame centrale
- 123b: Ailes (Éléments de guidage)
- 124: Lames ressort
- 125: Languettes rigides
- 126: Support
- 128: Cache extérieur
- 129: Axe de rotation selon Z (axe matériel)
- 130: Troisième système d'amortissement
- 131: Axe de rotation selon Y (axe matériel)
- 132: Cinquième et sixièmes surfaces de friction
- 133: Etrier

## Revendications

1. Dispositif d'amortissement (100) à friction permettant d'amortir les déplacements relatifs entre un premier élément structurel (20) et un deuxième élément structurel (30) d'un ouvrage de génie civil, comprenant :
- un premier système d'amortissement (110) permettant d'amortir une première composante de déplacement relatif entre ledit premier élément structurel (20) et ledit deuxième élément structurel (30), ledit premier système d'amortissement comportant une première surface de friction (111) et une deuxième surface de friction (112), les premières et deuxièmes surfaces de friction étant en contact et contraintes l'une contre l'autre pour former un premier engagement par friction, les premières et deuxièmes surfaces de friction étant en outre déplaçables en translation l'une par rapport à l'autre de manière à permettre l'amortissement de ladite première composante de déplacement relatif;
un deuxième système d'amortissement (120) permettant d'amortir une deuxième composante de déplacement relatif entre ledit premier élément structurel (20) et ledit deuxième élément structurel (30), ledit deuxième système d'amortissement comportant une troisième surface de friction (121) et une quatrième surface de friction (122), les troisièmes et quatrièmes surfaces de friction étant en contact et contraintes l'une contre l'autre pour former un deuxième engagement par friction, les troisièmes et quatrièmes surfaces de friction étant en outre déplaçables en rotation l'une par rapport à l'autre de manière à permettre l'amortissement de ladite deuxième composante de déplacement relatif ;
dans lequel le premier système d'amortissement (110) et le deuxième système d'amortissement (120) sont placés en série, et
une pièce intermédiaire entre ledit premier système d'amortissement (110) et ledit deuxième système d'amortissement (120), ladite pièce intermédiaire (103) comportant une première extrémité munie de ladite deuxième surface de friction (112) et une deuxième extrémité munie de ladite troisième surface de friction (121).

2. Dispositif d'amortissement (100) selon la revendication 1, **caractérisé en ce que** la première composante de déplacement relatif est constituée par une première translation selon une première direction (X) s'étendant entre ledit premier élément structurel (20) et ledit deuxième élément structurel (30),
et **en ce que** la deuxième composante de déplacement relatif est constituée par une deuxième translation selon une troisième direction (Y) différente de la première direction.

3. Dispositif d'amortissement (100) selon la revendication 2, **caractérisé en ce que** ladite troisième direction (Y) est sensiblement orthogonale à ladite première direction (X) et à une deuxième direction (Z) tangente au premier élément structurel (20).

4. Dispositif d'amortissement selon la revendication 1, ladite deuxième composante de déplacement relatif étant projetée dans ledit dispositif selon ladite rotation, ladite rotation étant effectuée autour d'un axe (R) parallèle à la deuxième direction (Z).

5. Dispositif d'amortissement (100) selon la revendication 1, **caractérisé en ce que** la première et la deuxième composante de déplacement relatif sont toutes deux constituées par des translations.

6. Dispositif d'amortissement (100) selon l'une quelconque des revendications 1 à 5, **caractérisé en ce que** ledit premier élément structurel est un câble sous tension fixé en un point d'ancrage (A1) audit deuxième élément structurel (30).

7. Dispositif d'amortissement (100) selon l'une des revendications 1 à 6, **caractérisé en ce que** ladite première extrémité de la pièce intermédiaire (103) forme un coulisseau s'étendant selon la première direction (X) et définissant deux faces planes, parallèles entre elles et à la première direction (X), équipées de ladite deuxième surface de friction (112) sous la forme de deuxièmes patins de friction s'étendant selon la première direction (X), **en ce que** le dispositif d'amortissement (100) comprend en outre un tube équipé de ladite première surface de friction (111) sous la forme de premiers patins de friction faisant saillie sur la face interne du tube (113) en étant poussée par des moyens de rappel élastiques en direction de l'intérieur du tube (113), ledit tube (113) étant engagé autour dudit coulisseau de sorte que les premiers patins de friction et les deuxièmes patins de friction frottent l'un contre l'autre.

8. Dispositif d'amortissement (100) selon l'une des revendications 1 à 7, **caractérisé en ce que** ladite deuxième extrémité de la pièce intermédiaire (103) forme un étrier avec deux parois de travail planes, parallèles entre elles et à la première direction (X), équipées de ladite troisième surface de friction (121) sous la forme de troisièmes patins de friction faisant saillie sur la face interne desdites parois de travail en étant poussée par des moyens de rappel élastiques (114) en direction de l'espace séparant les deux parois de travail, lesdites parois de travail étant également chacune munies d'un trou de passage entouré des troisièmes patins de friction, **en ce que** le dispositif d'amortissement (100) comprend en outre une poutrelle en I (123) comprenant deux ailes et une lame centrale équipée de ladite quatrième surface de friction (122) sous la forme de quatrièmes patins de friction disposés sur les faces de ladite lame centrale en entourant une ouverture alignée avec et entre lesdits trous de passage, ladite poutrelle étant engagée avec ledit étrier de sorte que le tronçon d'extrémité de la lame soit placé entre lesdites parois de travail avec les bords du tronçon d'extrémité desdites parois de travail logés entre les ailes de la poutrelle et **en ce que** lors d'un mouvement de rotation autour dudit axe de rotation (R) entre ladite poutrelle et ledit étrier, les troisièmes patins de friction et les quatrièmes patins de friction frottent l'un contre l'autre et amortissent ledit mouvement de rotation.

9. Dispositif d'amortissement (100) selon l'une des revendications 1 à 8, **caractérisé en ce qu'**il comprend en outre un troisième système d'amortissement (130) permettant d'amortir une troisième composante de déplacement relatif entre ledit premier élément structurel (20) et ledit deuxième élément structurel (30) et comportant :
une cinquième surface de friction fixe par rapport au deuxième élément structurel (30),
une sixième surface de friction fixe par rapport au deuxième système d'amortissement,
dans lequel la cinquième surface de friction et la sixième surface de friction sont en contact et contraintes l'une contre l'autre pour former un troisième engagement par friction de sorte que le mouvement relatif entre la cinquième surface de friction et la sixième surface de friction soit amorti par ledit troisième engagement par friction,
dans lequel le premier système d'amortissement (110), le deuxième système d'amortissement (120) et le troisième système d'amortissement sont placés en série,
et dans lequel la troisième composante de déplacement relatif est différente de la première composante de déplacement relatif et de la deuxième composante de déplacement relatif.

10. Dispositif d'amortissement (100) selon la revendication précédente, **caractérisé en ce que** la cinquième et la sixième surfaces de friction sont en rotation l'une par rapport à l'autre pour amortir la troisième composante de déplacement relatif.

11. Dispositif d'amortissement (100) selon l'une quelconque des revendications précédentes, **caractérisé en ce que** la première surface de friction est réalisée dans un premier matériau de friction, **en ce que** la deuxième surface de friction est réalisée dans un deuxième matériau de friction, et **en ce qu'**au moins l'un parmi ledit premier matériau de friction et ledit deuxième matériau de friction est un matériau polymère à coefficient de frottement réduit.

12. Ouvrage de génie civil comprenant un premier élément structurel (20) et un deuxième élément structurel (30), **caractérisé en ce qu'**il comporte au moins un dispositif d'amortissement (100) selon l'une quelconque des revendications précédentes.

13. Ouvrage de génie civil selon la revendication précédente, **caractérisé en ce que** ledit premier élément structurel (20) est un câble sous tension fixé par un point d'ancrage audit deuxième élément structurel (30).

14. Ouvrage de génie civil selon la revendication précédente, **caractérisé en ce que** ledit deuxième élément structurel (30) est une fondation, en particulier un tablier de pont.

15. Ouvrage de génie civil selon la revendication précédente, **caractérisé en ce que** ledit câble (20) est monté sur ladite fondation (30) à l'emplacement d'un point d'ancrage (A3) et **en ce que** le dispositif d'amortissement (100) est monté entre ledit câble et ladite fondation de façon éloignée dudit point d'ancrage (A3).

16. Ouvrage de génie civil selon la revendication précédente, **caractérisé en ce que** ledit dispositif d'amortissement (100) forme avec le câble et ladite fondation un triangle rectangle avec un angle aigu dont le sommet est placé au point d'ancrage (A3).

17. Procédé d'amortissement par friction des déplacements relatifs entre un premier élément structurel (20) et un deuxième élément structurel (30) d'un ouvrage de génie civil, comprenant les étapes suivantes :
- fournir un premier système d'amortissement (110) permettant d'amortir une première composante de déplacement relatif entre ledit premier élément structurel (20) et ledit deuxième élément structurel (30) et comportant :
une première surface friction (111) fixe par rapport au premier élément structurel (20),
une deuxième surface de friction (112) apte à se déplacer en outre en translation par rapport à la première surface de friction (111),
- fournir un deuxième système d'amortissement (120) permettant d'amortir une deuxième composante de déplacement relatif entre ledit premier élément structurel (20) et ledit deuxième élément structurel (30), ladite première composante de déplacement relatif étant différente de la deuxième composante de déplacement relatif, ledit deuxième système d'amortissement (120) comportant:
une troisième surface de friction (121),
une quatrième surface de friction (122), déplaçables en outre en rotation l'une par rapport à l'autre,
- placer la première surface de friction et la deuxième surface de friction d'une part et la troisième surface de friction et la quatrième surface de friction d'autre part en contact en les contraignant l'une contre l'autre pour former deux engagements par friction de sorte que le mouvement relatif entre d'une part la première surface de friction et la deuxième surface de friction et d'autre part entre la troisième surface de friction et la quatrième surface de friction soit amorti par ledit engagement par friction.

## Patentansprüche

1. Vorrichtung zum Reibungsdämpfen (100), die das Dämpfen einer relativen Bewegung zwischen einem ersten strukturellen Element (20) und einem zweiten strukturellen Element (30) eines Bauwerks erlaubt, aufweisend:
- ein erstes Dämpfungssystem (110), das die Dämpfung einer ersten Komponente relativer Bewegung zwischen dem ersten strukturellen Element (20) und dem zweite strukturellen Element (30) erlaubt, wobei das erste Dämpfungssystem eine erste Reibungsoberfläche (111) und eine zweite Reibungsoberfläche (112) aufweist, wobei die erste und zweite Reibungsoberfläche sich in Kontakt befinden und die eine gegen die andere gedrückt wird, um eine erste Verbindung durch Reibung zu schaffen, wobei die erste und zweite Reibungsoberfläche weiterhin zueinander translatorisch beweglich angeordnet sind, um so eine Dämpfung der ersten Komponente relativer Bewegung zu erlauben;
- ein zweites Dämpfungssystem (120), das die Dämpfung einer zweiten Komponente relativer Bewegung zwischen dem ersten strukturellen Element (20) und dem zweite strukturellen Element (30) erlaubt, wobei das zweite Dämpfungssystem eine dritte Reibungsoberfläche (121) und eine vierte Reibungsoberfläche (122) aufweist, wobei die dritte und vierte Reibungsoberfläche sich in Kontakt befinden und die eine gegen die andere gedrückt wird, um eine zweite Verbindung durch Reibung zu schaffen, wobei die dritte und vierte Reibungsoberfläche weiterhin zueinander rotatorisch beweglich angeordnet sind, um so eine Dämpfung der zweiten Komponente relativer Bewegung zu erlauben;
wobei das erste Dämpfungssystem (110) und das zweite Dämpfungssystem (120) hintereinander geschaltet sind, und
- ein Zwischenstück zwischen dem ersten Dämpfungssystem (110) und dem zweiten Dämpfungssystem (120), wobei das Zwischenstück (103) eine mit der zweiten Reibungsoberfläche (112) ausgestattete erste Extremität und eine mit der dritten Reibungsoberfläche (121) ausgestattete zweite Extremität.

2. Vorrichtung zum Dämpfen (100) nach Anspruch 1 **dadurch gekennzeichnet, dass** die erste Komponente relativer Bewegung durch eine erste Verschiebung in eine sich zwischen dem ersten strukturellen Element (20) und dem zweiten strukturellen Element (30) erstreckenden erste Richtung (X) erzeugt wird,
und dadurch dass die zweite Komponente relativer Bewegung durch eine zweite Verschiebung in eine von der ersten Richtung (X) unterschiedliche dritte Richtung (Y) erzeugt wird.

3. Vorrichtung zum Dämpfen (100) nach Anspruch 2, **dadurch gekennzeichnet, dass** die dritte Richtung (Y) grundsätzlich rechtwinkelig zu der ersten Richtung (X) und einer tangential zu dem ersten strukturellen Element (20) zweiten Richtung (Z) ist.

4. Vorrichtung zum Dämpfen nach Anspruch 1, wobei die zweite Komponente relativer Bewegung in die Vorrichtung entsprechend der Rotation projiziert wird, wobei die Rotation um eine Achse (R) parallel zu der zweiten Richtung (Z) ausgeführt wird.

5. Vorrichtung zum Dämpfen nach Anspruch 1, **dadurch gekennzeichnet, dass** die erste und zweite Komponente der relativen Bewegung beide translatorisch realisiert sind.

6. Vorrichtung zum Dämpfen (100) nach einem der Ansprüche 1 bis 5, **dadurch gekennzeichnet, dass** das erste strukturelle Element (30) ein Drahtkabel ist, das unter Spannung an einem Ankerpunkt (A1) an dem zweiten strukturellen Element (30) befestigt ist.

7. Vorrichtung zum Dämpfen (100) nach einem der Ansprüche 1 bis 6, **dadurch gekennzeichnet, dass** die erste Extremität des Zwischenstücks (103) eine Rutsche, die sich entlang der ersten Richtung (X) erstreckt und die zwei flache Flächen definiert, die parallel zueinander und zu der ersten Richtung (X) sind, ausgestattet mit der zweiten Reiboberfläche (112) in der Form zweier Reibungspads, die sich entlang der ersten Richtung (X) erstrecken, so dass die Vorrichtung zum Dämpfen (100) weiter ein R0hr aufweist, ausgestattet mit der ersten Reibungsoberfläche (11) in der Form von ersten Reibungspads, die auf die interne Fläche des Rohr (113) projiziert werden und von elastischen Rückführmitteln in die Richtung des Inneren des Rohrs (113) projiziert werden, wobei das Rohr (113) um die Rutsche angeordnet ist, so dass die ersten Reibungspads und die zweiten Reibungspads sich aneinander reiben.

8. Vorrichtung zum Dämpfen (100) nach einem der Ansprüche 1 bis 7, **dadurch gekennzeichnet, dass** die zweite Extremität des Zwischenstücks (103) einen Bügel mit zwei flachen Arbeitswänden, die parallel zueinander und zu der ersten Richtung (X) sind, die mit der dritten Reibungsoberfläche (121) in der Form von auf die innere Fläche der Arbeitsflächen projizierenden und mit von elastischen Rückführmitteln (114) in die Richtung des die zwei Arbeitsflächen trennenden Raums gedrückten dritten Reibungspads ausgestattet sind, wobei die Arbeitswände auch mit einem durchgehenden Loch ausgestattet sind, das durch drei Reibungspads umgeben ist, so dass die Vorrichtung zum Dämpfen (100) weiter einen Doppelstegträger (123) mit zwei Flügeln und einem zentralen Teil ausgestattet mit der vierten Reibungsfläche (122) in Form von vierten Reibungspads, die auf den Flächen des zentralen Teils eine Öffnung umgebend ausgerichtet mit und zwischen den durchgehenden Löchern angeordnet sind, wobei der Träger mit dem Bügel zusammenarbeitet, so dass der Endbereich des zentralen Teils zwischen die Arbeitswände mit den Kanten der Endbereiche der Arbeitswände zwischen den Flügeln des Doppelstegträgers angeordnet angeordnet ist und so dass während einer Rotationsbewegung um die Rotationsachse (R) zwischen dem Doppelstegträger und dem Bügel die dritten Reibungspads und die vierten Reibungspads gegeneinander reiben und die Rotationsbewegung dämpfen.

9. Vorrichtung zum Dämpfen (100) nach einem der Ansprüche 1 bis 8, **dadurch gekennzeichnet, dass** es weiterhin ein drittes Dämpfungssystem (130) aufweist, das die Dämpfung einer dritten Komponente relativer Bewegung zwischen dem ersten strukturellen Element (20) und dem zweite strukturellen Element (30) erlaubt, das dritte Dämpfungssystem aufweisend:
eine fünfte Reibungsoberfläche, die relativ zu dem zweiten strukturellen Element (30) befestigt ist,
eine sechste Reibungsoberfläche, die an dem zweiten Dämpfungssystem befestigt ist,
wobei die fünfte Reibungsoberfläche und die sechste Reibungsoberfläche sich in Kontakt befinden und die eine gegen die andere gedrückt wird, um eine dritte Verbindung durch Reibung zu schaffen, um so die relative Bewegung zwischen der fünften Reibungsoberfläche und sechsten Reibungsoberfläche durch die dritte Verbindung durch Reibung zu dämpfen,
wobei das erste Dämpfungssystem (110), das zweite Dämpfungssystem (120) und das dritte Dämpfungssystem hintereinander geschaltet sind, und wobei die dritte Komponente relativer Bewegung sich von der ersten Komponente relativer Bewegung und der zweiten Komponente relativer Bewegung unterscheidet.

10. Vorrichtung zum Dämpfen (100) nach dem vorigen Anspruch, **dadurch gekennzeichnet, dass** die fünfte und die sechste Reibungsoberfläche relativ zueinander rotiert, um die dritte Komponente relativer Bewegung zu dämpfen.

11. Vorrichtung zum Dämpfen (100) nach einem der vorigen Ansprüche, **dadurch gekennzeichnet, dass** die erste Reibungsoberfläche aus einem ersten Reibungsmaterial gefertigt ist, dass die zweite Reibungsoberfläche aus einem zweiten Reibungsmaterial gefertigt ist und dass mindestens eine des ersten Reibungsmaterials und des zweiten Reibungsmaterials ein Polymermaterial mit einem niedrigeren Reibungskoeffizienten ist.

12. Bauwerk aufweisend ein erstes strukturelles Element (20) und ein zweites strukturelles Element, **dadurch gekennzeichnet, dass** es mindestens eine Vorrichtung zum Dämpfen nach einem der vorigen Ansprüche aufweist.

13. Bauwerk nach dem vorigen Anspruch, **dadurch gekennzeichnet, dass** das erste strukturelle Element (20) ein unter Spannung an einem Ankerpunkt an dem zweiten strukturellen Element (30) befestigtes Drahtkabel ist.

14. Bauwerk nach dem vorigen Anspruch, **dadurch gekennzeichnet, dass** das zweite strukturelle Element (30) ein Fundament, insbesondere eine Platte einer Brücke ist.

15. Bauwerk nach dem vorigen Anspruch, **dadurch gekennzeichnet, dass** das Kabel (20) auf dem Fundament (30) an einer Position eines Ankerpunkts (A3) montiert ist, und dass die Vorrichtung zum Dämpfen (100) zwischen dem Kabel und dem Fundament beabstandet von dem Ankerpunkts (A3) montiert ist.

16. Bauwerk nach dem vorigen Anspruch, **dadurch gekennzeichnet, dass** die Dämpfungsvorrichtung (100) mit dem Kabel und dem Fundament ein rechtwinkeliges Dreieck mit einem spitzen Winkel, dessen Spitze an dem Ankerpunkt (A3) angeordnet ist, ausbildet.

17. Verfahren zum Reibungsdämpfen (100) einer relativen Bewegung zwischen einem ersten strukturellen Element (20) und einem zweiten strukturellen Element (30) eines Bauwerks, aufweisend die folgenden Schritte:
- Bereitstellen eines ersten Dämpfungssystems (110), das die Dämpfung einer ersten Komponente relativer Bewegung zwischen dem ersten strukturellen Element (20) und dem zweite strukturellen Element (30) erlaubt und aufweist:
eine erste Reibungsoberfläche (111) in fester Verbindung mit dem ersten strukturellen Element (20),
eine zweite Reibungsoberfläche (112) ausgebildet sich weiterhin translatorisch bezüglich der ersten Reibungsoberfläche (111) zu bewegen,
- Bereitstellen eines zweiten Dämpfungssystems (120), das die Dämpfung einer zweiten Komponente relativer Bewegung zwischen dem ersten strukturellen Element (20) und dem zweite strukturellen Element (30) erlaubt, wobei die erste Komponente relativer Bewegung sich von der zweiten Komponente relativer Bewegung unterscheidet, wobei das zweite Dämpfungssystem aufweist:
eine dritte Reibungsoberfläche (121),
eine vierte Reibungsoberfläche (112),
weiterhin zueinander rotatorisch beweglich,
- Anordnen der ersten Reibungsoberfläche und der zweiten Reibungsoberfläche zum einen und der dritten Reibungsoberfläche und der vierten Reibungsoberfläche zum anderen in Kontakt durch das Drücken der eine gegen die andere, um zwei Verbindungen durch Reibung zu schaffen, so dass die relative Bewegung zwischen zum einen der ersten Reibungsoberfläche und der zweiten Reibungsoberfläche und zum anderen der dritten Reibungsoberfläche und der vierten Reibungsoberfläche durch die Verbindung durch Reibung gedämpft wird.

## Claims

1. Device for friction damping (100) allowing the damping of relative movements between a first structural element (20) and a second structural element (30) of a work of civil engineering, comprising:
- a first damping system (110) allowing the damping of a first component of relative movement between said first structural element (20) and said second structural element (30), said first damping system comprising a first friction surface (111) and a second friction surface (112), the first and second friction surfaces being in contact and constrained the one against the other to form a first engagement by friction, the first and second friction surfaces being furthermore movable in translation one relative to the other in such a way as to allow the damping of said first component of relative movement;
- a second damping system (120) allowing the damping of a second component of relative movement to said first structural element (20) and said second structural element (30), said second damping system comprising a third friction surface (121) and a fourth friction surface (122), the third and fourth friction surfaces being in contact and constrained the one against the other to form a second engagement by friction, the third and fourth friction surfaces being furthermore movable in rotation the one relative to the other in such a way as to allow the damping of said second component of relative movement;
wherein the first damping system (110) and the second damping system (120) are placed in series, and
- an intermediary piece between said first damping system (110) and said second damping system (120), said intermediary piece (103) comprising a first extremity fitted with said second friction surface (112) and a second extremity fitted with said third friction surface (121).

2. Damping system (100) according to claim 1, **characterised in that** the first component of relative movement is constituted by a first translation in a first direction (X) extending between said first structural element (20) and said second structural element (30),
and **in that** the second component of relative movement is constituted by a second translation in a third direction (Y) different from the first direction.

3. Damping system (100) according to claim 2, **characterised in that** said third direction (Y) is substantially orthogonal to said first direction (X) and a second direction (Z) tangent to the first structural element (20).

4. Damping system according to claim 1, said second component of relative movement being projected in said device according to said rotation, said rotation being effected around an axis (R) parallel to the second direction (Z).

5. Damping system (100) according to claim 1, **characterised in that** the first and the second component of relative movement are both constituted by translations.

6. Damping system (100) according to any one of the claims 1 to 5, **characterised in that** said first structural element is a wire cable under tension fixed to an anchor point (A1) to said second structural element (30).

7. Damping system (100) according to one of the claims 1 to 6, **characterised in that** said first extremity of the intermediate piece (103) forms a slide extending according to the first direction (X) and defining two flat faces, parallel to each other and to the first direction (X), equipped with said second friction surface (112) in the form of two friction pads extending according to the first direction (X), such that the damping system (100) furthermore comprises a tube equipped with said first friction surface (111) in the form of first friction pads projecting on the internal face of the tube (113) being pushed by elastic return means in the direction of the interior of the tube (113), said tube (113) being engaged around said slide in such a way that the first friction pads and the second friction pads rub one against the other.

8. Damping system (100) according to one of the claims 1 to 7, **characterised in that** said second extremity of the intermediate piece (103) forms a bracket with the two flat working walls, parallel to each other and to the first direction (X), equipped with said third friction surface (121) in the form of third friction pads projecting on the internal face of said working walls and being pushed by elastic returns means (114) in the direction of the space separating the two working walls, said working walls being also equipped with a through-hole surrounded by three friction pads, such that the damping device (100) furthermore comprises an I-joist (123) comprising two wings and a central blade equipped with said fourth friction surface (122) in the form of fourth friction pads disposed on the faces of said central blade encircling an opening aligned with and between said through-holes, said joist being engaged with said bracket such that the end section of the blade is placed between said working walls with the edges of the end section of said working walls lodged between the wings of the I-joist and such that during a rotational movement around said rotation axis (R) between said I-joist and said bracket, the third friction pads and the fourth friction pads rub one against the other and dampen said rotational movement.

9. Damping device (100) according to one of the claims 1 to 8, **characterised in that** it furthermore comprises a third damping system (130) allowing the damping of a third component of relative movement between said first structural element (20) and said second structural element (30) comprising:
a fifth fixed friction surface in relation to the second structural element (30),
a sixth friction surface in relation to the second damping system,
wherein the fifth friction surface and the sixth friction surface are in contact and constrained one against the other to form a third engagement by friction in such a way that the relative movement between the fifth friction surface and the sixth friction surface is damped by said third engagement by friction,
wherein the first damping system (110), the second damping system (120) and the third damping system are placed in series,
and wherein the third component of relative movement is different from the first component of relative movement and from the second component of relative movement.

10. Damping device (100) according to the previous claim, **characterised in that** the fifth and the sixth friction surfaces rotate one in relation to the other to damp the third component of relative movement.

11. Damping device (100) wherein any one of the previous claims, **characterised in that** the first friction surface is manufactured in a first friction material, so that the second friction surface is manufactured from a second friction material so that at least one of said first friction material and said second material is a polymeric material with a lower coefficient of friction.

12. Civil engineering work comprising a first structural element (20) and a second structural element (30), **characterised in that** it comprises at least one damping device (100) according to one of the previous claims.

13. Civil engineering work according to the previous claim, **characterised in that** said first structural element (20) is a wire cable under tension fixed by an anchor point to said second structural element (30).

14. Civil engineering work according to the previous claim, **characterised in that** said second structural element (30) is a foundation, in particular a bridge deck.

15. Civil engineering work according to the previous claim, **characterised in that** said cable (20) is mounted on said foundation (30) at the position of an anchor point (A3) and **in that** the damping device (100) is mounted between said cable and said foundation in a distanced manner from said anchor point (A3).

16. Civil engineering work according to the previous claim, **characterised in that** said damping device (100) forms with the cable and said foundation a rectangular triangle with the acute angle whose top is placed at the anchor point (A3).

17. Method of friction damping of relative movements between a first structural element (20) and a second structural element (30) of a civil engineering work, comprising the following steps:
- supply a first damping system (110) allowing the damping of a first component of relative movement between said first structural element (20) and said second structural element (30) and comprising:
a first friction surface (111) fixed in relationship to the first structural element (20),
a second friction surface (112) capable of displacing furthermore in translation with relationship to the first friction surface (111),
- supply a second damping system (120) allowing the damping of a second component of relative movement between said first structural element (20) and said second structural element (30), said first component of relative movement being different from the second component of relative movement, said second damping (120) comprising:
a third friction surface (121),
a fourth friction surface (122),
furthermore movable in rotation one in relation to the other,
- place the first friction surface and the second friction surface on the one hand and the third friction surface and the fourth friction surface on the other hand in contact by constraining them one against the other to form two engagements by friction so that the relative movement between on the one hand the first friction surface and the second friction surface and on the other hand between the third friction surface and the fourth friction surface is damped by said engagement by friction.
